**Europäisches Patentamt**

**European Patent Office**

**Office européen des brevets**

(19)

(11) Veröffentlichungsnummer: **0 048 895**
A1

(12) ## EUROPÄISCHE PATENTANMELDUNG

(21) Anmeldenummer: **81107321.2**

(22) Anmeldetag: **16.09.81**

(51) Int. Cl.³: **F 16 C 33/76,** F 16 C 33/66, F 16 C 35/04

(30) Priorität: **26.09.80 DE 3036287**

(43) Veröffentlichungstag der Anmeldung: **07.04.82** Patentblatt 82/14

(84) Benannte Vertragsstaaten: **BE DE FR GB IT NL SE**

(71) Anmelder: **KUHBIER GMBH & CO., Erste Mühle 3, D-5272 Wipperfürth (DE)**

(72) Erfinder: **Motsch, Alfons, Dipl.-Ing., Nistenbergstrasse 38, D-5275 Bergneustadt (DE)**

(74) Vertreter: **Arentoft, Holger, Gartenstrasse 18, D-5461 Kasbach-Ohlenberg (DE)**

(54) **Druckausgleichsventil für Lagergehäuse.**

(57) Die Kugeln oder Rollen eines Kugel- oder Rollenlagers wirken während des Umlaufs als Trubinenschaufeln und erzeugen im geschlossenen Lagergehäuse einen Strömungsvorgang. Das Schmieröl wird mit Luft verwirbelt und bildet einen Ölnebel.

Der Ölnebel wird von einer mit nadelfeinen Löchern (35) versehenen elastischen Membrane (33) aufgefangen und selektiert, die in einem vor dem freien Ende des Lagergehäuses aufgesteckten Abschlußdeckel (24) angeordnet ist. Wenn infolge Überdrucks die Membrane (33) sich bläht, werden die Löcher (35) entsprechend erweitert und lassen den Druck aus, während das Schmieröl an der Innenseite der Membrane (33) abfließt und ins Lagergehäuseinnere zurückläuft.

0048895

GP 451

B e s c h r e i b u n g

Die Erfindung betrifft ein Druckausgleichsventil für
Lagergehäuse, und zwar insbesondere für solche mit Einrichtungen zur Abdichtung gegen Schmierstoffaustritt.

In vielen Fällen, z.B. bei Maschinen, mittels welcher
Lebensmittel, pharmazeutische oder chemische Präparate aufbereitet oder gefördert werden, ist es notwendig, zu verhindern, daß Schmierstoff selbst in kleinsten Mengen aus den Kugel- oder Rollenlagern der Verarbeitungsmaschinen heraustreten könnte. Die Schwierigkeit hierbei liegt vorrangig daran, daß in einem
entsprechend abgedichteten Lagergehäuse ein Überdruck
entsteht, indem die Kugeln oder Rollen des Lagers während des Umlaufs als Turbinenschaufeln wirken und im
Lagergehäuseinnern den Überdruck erzeugen, der zwar
nicht sehr groß, aber immerhin groß genug ist, um das
herumgewirbelte Schmieröl durch selbst die besten Dichtungen tropfenweise herauszupressen. Keine Abdichtung
der Welle kommt gegen ihn an, es sei denn, die Abdichtung würde einen für den Wirkungsgrad und die Temperaturentwicklung im Lager untragbaren Reibungswiderstand
entwickeln. Bestrebungen, an dem Oberteil des Lagergehäuses enge Entlüftungsbohrungen anzubringen, hatten
wenig Erfolg. Wenn diese Bohrungen ausreichend eng sind,
um bei der Reinigung der Maschine Spritzwasser nicht
durchzulassen, werden sie von dem im Lager hochgeschleuderten Schmieröl verstopft. Sind aber die Bohrungen groß genug, daß eine Verstopfung nicht zustande kommt, lassen sie einerseits während der Arbeit der Maschine nicht nur Luft, sondern auch Öl durch, und andererseits wird bei Reinigung Spritzwasser durch die Entlüftungsöffnungen eingelassen. Und eine Anlage, die der Herstellung oder der Förderung von Lebensmitteln usw. dient, muß zwangsläufig regelmäßig durch Abspritzen gereinigt werden.

Das Problem, eine Druckausgleichseinrichtung für ein gegen Austritt von Schmieröl sowie ebenfalls gegen Eintritt von Spritzwasser abgedichtetes Lagergehäuse zu schaffen, wurde bisher nicht gelöst und dementsprechend von der Fachwelt als technisch unlösbar angesehen.

Die vorliegende Erfindung hat zum Ziel, an einem Lagergehäuse mit Einrichtungen zur Flüssigkeitsabdichtung ein Druckausgleichsventil zu schaffen, das sich unter Einwirkung des während des Betriebs im Lagergehäuse entstehenden Überdrucks soweit öffnet, daß eine Verbindung des Lagergehäuseinneren mit der Außenatmosphäre entsteht und einen Druckausgleich herbeiführt, das aber bei Stillstand geschlossen ist und kein Spritzwasser durchläßt.

Dieses Erfindungsziel wird dadurch erreicht, daß vor dem freien Ende des Lagergehäuses, also vor dem Ende der Lagerwelle, ein Abschlußdeckel aufgesteckt ist, welcher eine dem Innenquerschnitt des Abschlußdeckels ausfüllende, mit einer Anzahl nadelfeiner Löcher ausgestattete elastische Membrane enthält, wobei die Außenluft entweder unmittelbar oder vorzugsweise über eine in einer der Membrane vorgelagerten äußeren Deckelwand angeordnete Luftdurchgangsöffnung mit der Membrane in Verbindung steht.

Der während des Betriebes im Lager und Lagergehäuse entstehende Überdruck bläht die Membrane ballonartig auf;
dadurch erweitern sich die nadelfeinen Löcher der Membrane, und der Überdruck entweicht durch sie. Wenn aber
die Anlage ruht, zieht sich die Membrane und mit ihr die
nadelfeinen Löcher zusammen, und Spritzwasser, Feuchtigkeit usw. ist der Weg ins Lagerinnere versperrt.

In einer bevorzugten Ausführungsform der Erfindung sind
am Abschlußdeckel eine äußere und eine innere Deckelwand ausgebildet, zwischen welchen die Membrane angeordnet ist. Jede dieser Deckelwände ist mit je einer
Luftdurchgangsöffnung ausgestattet, und die innere Dekkelwand weist darüber hinaus an ihrem unteren Rand eine
Ölrücklaufbohrung auf. Die äußere Deckelwand schützt die
Membrane gegen Beschädigungen und sonstige Fremdeinflüsse;
die innere Deckelwand dient erstens zu einer einfachen
Montage der Membrane und zum anderen dazu, den im Innenraum des Lagergehäuses herumgewirbelten Schmierölteilchen den Weg in den Membranenzwischenraum zu erschweren
und somit zu erreichen, daß möglichst wenig Öl an die
Membrane gelangt. Die unvermeidlicherweise eingedrungenen
kleinen Ölmengen laufen durch die Ölrücklaufbohrung in das
Lagergehäuseinnere zurück.

In einer weiteren vorteilhaften Ausführungsform der Erfindung sind die nadelfeinen Löcher der Membrane in deren oberen Abschnitt angeordnet, damit Ölpartikel, die
trotz des Schutzes der inneren Deckelwand auf die Membrane aufgeschleudert werden, abfließen können und mithin die nadelfeinen Löcher nicht verstopfen.

Während die Luftdurchgangsöffnung der inneren Deckelwand
etwa achsgleich mit der Lagergehäuselängsachse (Wellen-

- Seite 4 -

achse) verlaufen kann, ist die Luftdurchgangsöffnung
der äußeren Deckelwand vorzugsweise im unteren Randbereich des Abschlußdeckels angeordnet, damit Kondenzwasser bzw. evtl. eingedrungenes Spritzwasser nach
außen hin abfließt.

Im Rahmen der Erfindung ist der Begriff "Lagergehäuse"
im weitesten Sinne zu verstehen. Der das Entlüftungsventil enthaltende Abschlußdeckel kann nicht nur auf
jedes Lagergehäuse, sondern auch auf jedes Lager aufgesteckt werden, das, in sich abgedichtet, als Gehäuselagereinheit ausgebildet ist.

Anhand der Figuren wird in der Folge ein Ausführungsbeispiel der Erfindung dargestellt und erläutert.
Es zeigen :

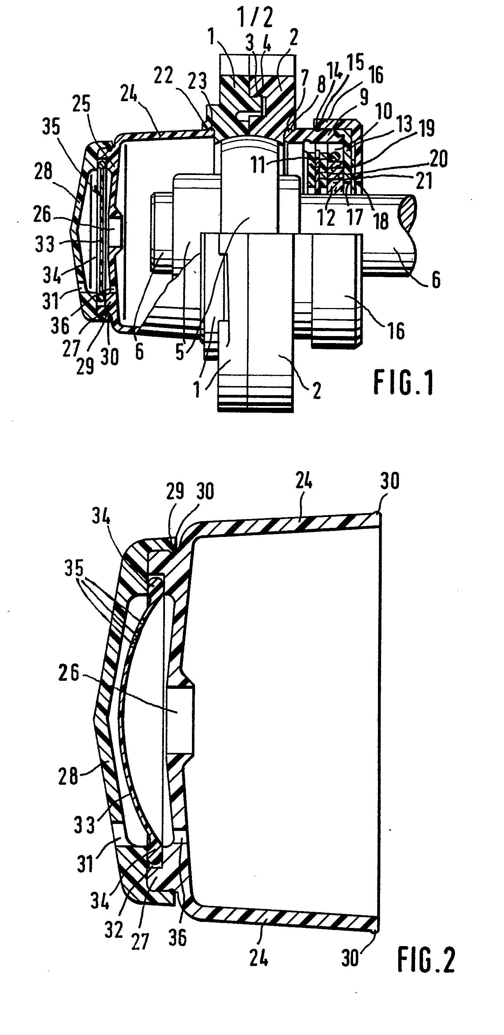

Figur 1     ein geschlossenes und abgedichtetes, mit
            Lager und gelagerter Welle sowie mit einem
            erfindungsgemäßen aus einem Abschlußdeckel
            und einer gelöcherten Membrane zusammengesetzten Druckausgleichsventil versehenes
            Lagergehäuse, bei entspannter Membrane, in
            einer Seitenansicht und teilweise im Schnitt,

Figur 2     den das Druckausgleichsventil enthaltenden
            Abschlußdeckel in einem Längsschnitt, mit
            aufgeblähter Membrane, gegenüber der Darstellung Figur 1 etwas vergrößert

                              u n d

Figur 3     den Abschlußdeckel Figur 2 in einer Frontansicht mit teilweise weggeschnittenem
            Frontteil.

                              - Seite 5 -

Die auf den Figuren aufgeführten Bezugsziffern zeigen
an :

| | |
|---|---|
| 1, 2 | ringförmige Gehäuseschalen |
| 3 | Schnappwulst an Gehäuseschale 1 |
| 4 | Rundnut an Gehäuseschale 2 |
| 5 | Lager |
| 6 | zu lagernde Welle |
| 7 | Schnappwulst an Anschlußstück 9 |
| 8 | Rundnut an Gehäuseschale 2 |
| 9 | Anschlußstück |
| 10 | stufenförmige Rundumausnehmung am Anschlußstück 9 |
| 11 | ringförmige Feder am Dichtring 12 |
| 12 | Filzdichtring |
| 13 | äußerer Gegenring am Filzdichtring 12 |
| 14,15 | federnde Schnappvorrichtung an der Abschlußschale 16 und dem Anschlußstück 9 |
| 16 | Abschlußschale |
| 17 | flache ringförmige Ausnehmung an der Abschlußschale |
| 18 | scheibenförmiger äußerer Schutzring |
| 19 | innerer Gegenring |
| 20 | stufenförmige flache Rundumausnehmung am Anschlußstück 9 |
| 21 | scheibenförmiger innerer Schutzring |
| 22 | stufenförmige Rundumausnehmung am äußeren Rand der ersten Gehäuseschale 1 |

- Seite 6

| | |
|---|---|
| 23 | Rundumnut im Rande der stufenförmigen Ausnehmung 22 |
| 24 | Abschlußdeckel |
| 25 | Deckelwand des Abschlußdeckels 24 |
| 26 | zentrale Luftdurchgangsöffnung an der Deckelwand 25 |
| 27 | Rundumwulst an der Deckelwand 25 |
| 28 | äußere Deckelschale |
| 29,30 | federnde Schnappvorrichtung an dem Rundumwulst 27 und der Deckelschale 28 |
| 31 | Luftdurchgangsöffnung der Deckelschale 28 |
| 32 | Rundumausnehmung an der Innenseite der Rundumwulst 27 |
| 33 | elastische Membrane |
| 34 | Befestigungsring der Membrane 33 |
| 35 | Löcher in der Membrane 33 |
| 36 | Ölrücklaufbohrung an der Deckelwand 25 |

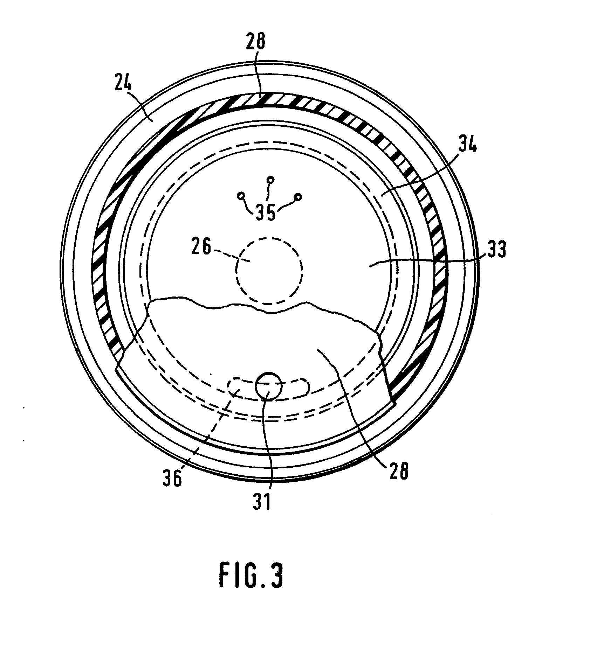

Das Lagergehäuse Figur 1 bis 3 ist aus einem geeigneten Kunststoff, z.B. aus einem Polyacetal (Polyoxymethylen) im Spritzgußverfahren hergestellt. Bei der Verarbeitung von Lebensmitteln und pharmazeutischen Produkten weist Kunststoff als Herstellmaterial wesentliche Vorteile auf, weil man jeweils eine gegen das jeweilige Produkt unempfindliche Kunststoffart wählen kann - ganz abgesehen von der Preisgünstigkeit des Herstellungsverfahrens. Jedoch ist lediglich das Ausführungsbeispiel, nicht aber die vorliegende Erfindung, auf ein Kunststofflagergehäuse

- Seite 7 -

bezogen; die Erfindung kann ebensowohl an einem Metalllagergehäuse Verwendung finden.

Das Lagergehäuse Figur 1 ist aus zwei ringförmigen Gehäuseschalen 1,2 zusammengesteckt, indem nach der Lehre
des DE-GM 79 32 611 die eine Gehäuseschale 1 mit einem
Schnappwulst 3 in eine an der zweiten Gehäuseschale 2
ausgebildeten Rundnut 4 elastisch federnd eingreift und
in dieser Weise eine kraft- und formschlüssige Verbindung erstellt. Vor dem Zusammenstecken der beiden Lagergehäuseschalen 1,2 ist das Lager 5 in die Gehäuseschalen eingebracht, das die zu lagernde Welle 6 aufnimmt.

Mit Hilfe einer ähnlichen, aus einem Schnappwulst 7 und
einer in der Gehäuseschale 2 eingearbeiteten Rundnut 8
ist ein schalenförmiges, mit einer weiten Zentralöffnung
versehenes Anschlußstück 9 in die Gehäuseschale 2 eingesteckt und dort federnd eingeschnappt. In dem schalenförmigen Anschlußstück 9 ist eine tiefe und breite stufenförmige Rundumausnehmung 10 ausgebildet, welche einen
von einer ringförmigen Feder 11 umspannten Dichtring 12
aus Filz aufnimmt. Der Filzdichtring 12 weist einen kleineren Außenquerschnitt als die Rundumausnehmung 10 auf
und kann dementsprechend eine Radialverschiebung in der
Rundumausnehmung ausführen.

An der Innenseite der Abschlußschale 16 ist eine flache,
ringförmige Ausnehmung 17 ausgebildet, welche einen
scheibenförmigen flachen äußeren Schutzring 18 (aus
Kunststoff oder Aluminium) aufnimmt, dessen offener
Querschnitt kleiner ist als die offenen Querschnitte des
äußeren Gegenringes 13 und der ringförmigen Abschlußschale 16, dem offenen Querschnitt des Filzdichtringes 12
gleicht und eine Radialbewegung in der Ausnehmung 17 ausführen kann.

Nach dem Innenraum des Lagergehäuses 1,2 hin ist ein
innerer Gegenring 19 angeordnet. Zwischen diesem und
dem schalenförmigen Anschlußstück 9 ist in einer flachen stufenförmigen Rundumausnehmung 20 des Anschlußstücks eine dem flachen äußeren Schutzring 18 gleichen
inneren Schutzring 21 eingebracht. Die offenen Querschnitte der Abschlußschale 16, des äußeren Gegenringes
13, des Anschlußstücks 9 und des inneren Gegenringes 19
bilden zusammen eine nach innen hin zulaufende Kegelfläche, welche der Achse der Welle 6 erlaubt, einen der
Montage erleichternden spitzen Winkel mit der Gehäuselagerlängsachse zu bilden. Eine solche Schräglage der
Lagerachse ist dadurch möglich geworden, daß der äußere
Lagerring sowie die Innenwand des Lagergehäuses 1,2 kugelschalenförmig ausgebildet sind.

Innerhalb dieses Winkels bleibt die Welle 6 ungeachtet
einer gegebenen Schräglage gegen Austritt von Schmieröl
abgedichtet, indem der Filzdichtring 12 der Axiallage
der Welle 6 folgt. In gleicher Weise dichten die beiden
flachen Schutzringe 18,21 den Filzdichtring 12 gegen Öl
(innerer Schutzring 21) sowie gegen das Eindringen von
Spritzwasser von außen her (äußerer Schutzring 18) ab.

An dem äußeren Rand der ersten Gehäuselagerschale 1 ist
eine stufenförmige Ausnehmung 22 angeordnet; in deren
Rand ist wiederum eine Rundumnut 23 eingearbeitet. In
dieser Ausnehmung 22 schnappt ein mit einer der Rundumnut 23 entsprechenden Rundumwulst versehener Abschlußdeckel 24 federnd ein, an dessen Deckelwand 25 eine zentrale Luftdurchgangsöffnung 26 ausgebildet ist. Auf einen Rundumwulst 27 der Deckelwand 25 ist eine äußere
Deckelschale 28 aufgesteckt und mit einer federnden

0048895
GP .451

Schnappvorrichtung 29,30 befestigt. Die äußere Deckelschale 28 weist an seinem unteren (bodennahen) Teil
eine Luftdurchgangsöffnung 31 auf, welche den Raum
hinter der Deckelschale mit der Außenluft verbindet.
und gleichzeitig als Ablauf für Kondenzwasser und evt.
eingedrungenes Spritzwasser dient.

Zwischen der aufsteckbaren äußeren Deckelschale 28 und
der Deckelwand 25 ist in einer Rundumausnehmung 32 der
Rundumwulst 27 eine elastische Membrane 33 mit Hilfe einer Befestigungswulst 34 angeordnet. Die elastische Membrane 33 ist an ihrem oberen (bodenfernen) Bereich mit
einer Anzahl nadelfeiner Löcher 35 versehen, die sich
im Entspannungszustand der Membrane 33 schließen und
sich beim Aufblähen der Membrane 33 öffnen. Dieser Effekt kann z.B. dadurch hervorgerufen werden, daß man die
Löcher 35 bei aufgespannter (aufgeblähter) Membrane einsticht. Die innere Deckelwand 25 des Abschlußdeckels 24
ist an ihrem unteren (bodennahen) Teil mit einer Ölrücklaufbohrung 36 versehen, welche den Raum zwischen Membrane 33 und der inneren Deckelwand 25 mit dem Lagergehäuseinneren verbindet und dem Rücklauf des in diesem
Raum hineingeschleuderten Ölpartikel dient.

Das erfindungsgemäße,in seiner Grundform aus dem Abschlußdeckel 24 und der gelöcherten elastischen Membrane 33 bestehende Druckausgleichsventil funktioniert wie folgt:
während des Umlaufs der Kugeln bzw. Rollen des Lagers 5
wirbeln diese das Schmieröl auf und erzeugen turbinenartig in der ölgesättigten Luft einen Überdruck, der das
Öl auf die Nahtstellen insbesondere der Wellenabdichtung
6,12 drückt. Ohne Druckausgleichventil 24,33 würden unter
dem Zwang dieses Druckes Schmierölteilchen durch die Nahtstellen herausgepreßt werden. Der Druckanstieg im Lager-

0048895
GP 451

gehäuse 1,2 bläht die Membrane 33 auf, wobei die nadelfeinen Löcher 35 erweitert werden und einen Druckausgleich herbeiführen. Durch Vorschalten der mit der zentralen Luftdurchgangöffnung 26 versehenen inneren Deckelwand 25 wird erreicht, daß nur ein kleiner Teil des aufgewirbelten Öls an die Membrane 33 gelangen kann; da sich die nadelfeinen Löcher 35 am oberen Bereich der Membrane befinden, können diese Ölpartikel die Löcher nicht verstopfen, sondern sie laufen an der Membraneninnenwand ab und durch die Ölrücklaufbohrung 36 in das Lagergehäuseinnere zurück.

Die äußere Deckelschale 28 schützt die Membrane 33 gegen Einflüsse von außen, z.B. gegen Spritzwasser bei der Reinigung und gegen sonstige Fremdeinwirkung. Die Luftdurchgangsöffnung 31 am unteren Teil der Deckelschale 28 stellt die atmosphärische Verbindung zur Membrane 33 her und dient gleichzeitig als Ablauf für Kondenzwasser und eingedrungenes Spritzwasser.

Das hier beschriebene Ausführungsbeispiel ist auf eine besonders vorteilhafte Abdichtung der Lagerwelle 6 bezogen. Die Erfindung ist jedoch in keiner Weise mit dieser Abdichtungsart verknüpft, sondern sie ist bei jeder Wellendichtung nützlich, z.B. bei der vielfach verwendeten Doppeldichtlippe aus Gummi, wo sie noch notwendiger erscheint als bei der Filzringdichtung des Ausführungsbeispiels, weil die Gummidoppellippe im Zuge der fast unvermeidbaren Schrägstellung der Wellenachse gegenüber der Lagergehäuselängsachse an einer Seite erheblich weniger dicht ist als an der gegenüberliegenden Seite.

P a t e n t a n s p r ü c h e

1. Druckausgleichsventil für geschlossene Lagergehäuse, und zwar insbesondere für solche mit Einrichtungen zur Abdichtung gegen Schmierstoffaustritt, dadurch gekennzeichnet, daß vor dem freien Ende des Lagergehäuses (1,2) ein Abschlußdeckel (24,28) aufgesteckt ist, welcher eine dem Innenquerschnitt des Abschlußdeckels absperrende und mit einer Anzahl nadelfeiner Löcher (35) ausgestattete elastische Membrane (33) enthält, die mit der Außenluft in Berührung steht.

2. Druckausgleichsventil für geschlossene Lagergehäuse nach Anspruch 1, dadurch gekennzeichnet, daß an dem Abschlußdeckel (24) eine äußere Deckelschale (28) und eine innere Deckelwand (25) ausgebildet sind, zwischen welchen die Membrane (33) angeordnet ist, wobei sowohl die äußere Deckelschale (28) als auch die innere Deckelwand (25) je eine Luftdurchgangsöffnung (31,26) besitzt und die innere Deckelwand (25) darüber hinaus an ihrem unteren bodennächsten Rand eine in das Lagergehäuseinnere zurückführende Ölrücklaufbohrung (36) aufweist.

3. Druckausgleichsventil für geschlossene Lagergehäuse nach Anspruch 1, dadurch gekennzeichnet, daß die nadelfeinen Löcher (35) der Membrane (33) in deren oberen (bodenfernen) Abschnitt angeordnet sind.

4. Druckausgleichsventil für geschlossene Lagergehäuse
nach Ansprüchen 1 und 2, dadurch gekennzeichnet,
daß die Luftdurchgangsöffnung (26) der inneren Dekkelwand (25) etwa achsgleich mit der Lagergehäuselängsachse (Wellenachse) verläuft, während die Luftdurchgangsöffnung (31) der äußeren Deckelschale (28)
im unteren (bodennächsten) Randgebiet der Deckelschale (28) angeordnet ist.

0048895

FIG.1

FIG.2

FIG.3

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US − A − 3 064 982 (A.J. STEPHENS)<br>* Fig. 1 *<br>−− | 1,4 |
| | CH − A − 393 956 (W. BÜRKI)<br>* Patentanspruch; Fig. 1 bis 4 *<br>−− | 1 |
| | GB − A − 1 534 570 ( DENROY PLASTICS LTD.)<br>* Fig. 1, 2 *<br>−− | 1 |
| | GB − A − 712 493 (TIMKEN ROLLER BEARING CO.)<br>* Fig. 1 *<br>−− | 2 |
| A | DE − U − 1 779 772 (K. MORBE et al.)<br>* Anspruch 1; Fig. 1 *<br>−− | |
| A,D | DE − U1 − 7 932 611 (KUHBIER GMBH & CO.)<br>−− | |
| P,X | DE − U1 − 8 025 770 (KUHBIER GMBH & CO.)<br>* gesamtes Dokument *<br>−−−− | 1−4 |

**KLASSIFIKATION DER ANMELDUNG (Int. Cl.³)**

F 16 C 33/76
F 16 C 33/66
F 16 C 35/04

**RECHERCHIERTE SACHGEBIETE (Int. Cl.³)**

B 65 D 51/00
F 16 C 33/00
F 16 C 35/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 02-12-1981 | MASSALSKI |

EPA form 1503.1  06.78